# EUROPÄISCHE PATENTANMELDUNG

(11) **EP 1 974 893 A2**
(43) Veröffentlichungstag der Anmeldung: **01.10.2008**
(21) Anmeldenummer: 08012435.7
(22) Anmeldetag: 08.08.2002
(51) Int. Cl.: B29C 59/02, B29C 37/00, B29C 51/14, B29C 51/42, B29C 51/30

(54) **Vorrichtung zum Formen von Teilen mit eingeformter Oberflächenstruktur**

(30) Priorität: 13.08.2001 US 929693
(62) Teilanmeldung aus: 02017847.1
(71) Anmelder: Herbert Olbrich GmbH & Co. KG, 46395 Bocholt (DE)
(72) Erfinder: Spengler, Ernst Maximilian, 63150 Heusenstamm (DE)
(74) Vertreter: Patentanwälte Buse, Mentzel, Ludewig

(57) **Zusammenfassung**

Die Erfindung betrifft eine Vorrichtung zum Formen von Teilen mit eingeformter Oberflächenstruktur. Die Vorrichtung umfasst eine Formvorrichtung (1) sowie eine Heizvorrichtung (50). Die Formvorrichtung (1) enthält eine obere Formhälfte (5) für die Oberseite des herzustellenden Formteils, wobei die Oberfläche (5') der Formhälfte (5) eine eingeformte Struktur aufweist und gegenüberliegend eine Oberfläche (11') der zweiten Formhälfte (11). In der Heizvorrichtung (50) wird die Deckschicht (20), die eine Haut (21) aus einem thermoplastischen Werkstoff und einen Träger (22) aus einem Kunststoff-Schaumstoff umfasst, aufgeheizt. Dabei kann die Haut (21) auf eine erste Temperatur und der Träger (22) auf eine zweite Temperatur erwärmt werden. Mittels eines Spannrahmens (60) kann die Deckschicht (20) von der Heizvorrichtung (50) in die Formvorrichtung (1), vorzugsweise entlang der Schienen (61) transportiert werden (Fig.1).

## Beschreibung

Die Erfindung betrifft eine Vorrichtung zum Herstellen von Formteilen wie Innenaustattungsteilen für Kraftfahrzeuge, wobei die Teile eine eingeformte Oberflächenstruktur nach Art einer Prägung, Narbung oder dergleichen aufweisen.

Auf verschiedenen technischen Gebieten und insbesondere bei den Herstellern von Kraftfahrzeugen besteht eine ständig wachsende Nachfrage nach verschiedenen, geformten Bauteilen, die eine Oberflächenstruktur aufweisen, die in oder auf die Oberfläche solcher Teile geformt wird. Beispielsweise werden zunehmend Innenausstattungsteile für Kraftfahrzeuge benötigt wie Dachverkleidungen, Türverkleidungseinsätze, Säulenabdeckungen, Konsolen, Ablagefächer, Armaturenbretter und dergleichen, die eine Oberflächenstruktur wie eine künstliche Ledernarbung, eine künstliche holzähnliche Maserung, ein getüpfeltes, mit Linien versehenes oder ähnliches Muster, vorgetäuschte Nahtlinien, erhabene Vorsprünge, eingeschnittene Vertiefungen oder sogar eingeformten Text oder Logos aufweisen. Eine solche Oberflächenstruktur verbessert das Aussehen der sichtbaren Oberfläche des Formteils oder verbessert die Oberflächeneigenschaften hinsichtlich der Haptik oder der Griffigkeit oder gibt eine gewünschte Information in Form von Text, Logos oder dergleichen.

Dementsprechend ist es eine Aufgabe der Erfindung, eine Vorrichtung zum Herstellen eines Formteiles anzugeben, das eine Oberflächenstruktur aufweist, die genau die angestrebte Oberflächenstruktur ohne Verzerrungen aufweist und keinerlei Beschränkungen bezüglich des Typs der Oberflächenstruktur besitzt und verwendet werden kann, um synthetische Ledernarbungen, synthetische Holzmaserungen, Muster von Tüpfelungen, und Streifen oder dergleichen, erhabene Vorsprünge, eingezogene Vertiefungen, künstliche Nahtlinien, Text, Logos und dergleichen mit großem Detail, Genauigkeit und Produzierbarkeit herzustellen. Die erstrebte Oberflächenstruktur soll in die Oberfläche eines Formteils während seiner Formung eingebracht werden, ohne dass zusätzliche Arbeitsschritte oder Aufwand zur Erzielung dieser Oberflächenstruktur erforderlich sind. Die Materialien für die strukturierte Deckschicht, die auch in Kombination mit im wesentlichen jedem in Betracht kommenden rückseitigem Stützmaterial oder Substrat verwendet werden, sollen leicht recycelbar sein. Ferner zielt die Erfindung darauf ab, Nachteile des Standes der Technik zu vermeiden oder zu umgehen sowie zusätzliche Vorteile zu erreichen, wie es sich aus dieser Beschreibung ergibt.

Die vorgenannten Aufgaben werden erfindungsgemäß gelöst mit einer Vorrichtung mit den Merkmalen des Anspruchs 1 oder 2. Mit einer solchen Vorrichtung lässt sich ein dreidimensionales konturiertes Formteil mit einem Substrat und einer darauf laminierten Deckschicht herstellen, die eine Haut und einen Träger umfasst, der am Substrat anhaftet oder damit verbunden ist. Die Haut wird mit einer Oberflächenstruktur versehen, die gleichmäßig und stetig ohne Verzerrung im Bereich der dreidimensional konturierten Fläche des Formteils aufgebracht ist.

Die Vorrichtung zum Herstellen des Formteiles mit der eingeformten Oberflächenstruktur besitzt ein Formwerkzeug für die Vorderseite und ein Formwerkzeug für die Rückseite, wobei es sich bei dem ersten Formwerkzeug um eine Oberform beziehungsweise eine obere Formhälfte und bei dem zweiten Formwerkzeug um eine untere Formhälfte handelt. Die obere Formhälfte hat eine Formfläche. Dies bedeutet, sie ist mit einer gewünschten Kontur bearbeitet, dann feinpoliert oder abgeschliffen sowie danach durch mechanisches Gravieren, Prägen, Fräsen, Ätzen oder dergleichen mit einer Strukturoberfläche versehen. Diese Struktur ist ein exaktes, negatives Abbild der gewünschten Oberflächenstruktur des herzustellenden Formteils.

Die obere Formhälfte umfasst eine mit einer Vakuumquelle verbundene Vakuumkammer und sehr feine Vakuumbohrungen, die sich von der Vakuumkammer durch die obere Formhälfte erstrecken. Diese Vakuumbohrungen weisen insbesondere mechanisch gebohrte Abschnitte und lasergebohrte Abschnitte auf, die von den mechanisch gebohrten Abschnitten ausgehend in der Oberfläche der Formhälfte münden. Die lasergebohrten Bohrungsabschnitte haben Öffnungen mit einem Durchmesser von weniger als 0,5 mm, insbesondere weniger als 0,3 mm und speziell etwa 0,2 mm.

Sowohl die obere Formhälfte wie die untere Formhälfte werden mittels Kühlwasser oder Kühlöl oder dergleichen temperiert, das durch Kühlkanäle strömt, um die Formen beispielsweise auf einer Temperatur von 50° bis 60° C zu halten. Die exakte Höhe der notwendigen Temperatur hängt von den verwendeten Werkstoffen, der Arbeitsgeschwindigkeit und dem jeweiligen Verfahrensstand ab.

Die zweite oder untere Formhälfte ist der oberen Formhälfte im wesentlichen angepasst, wobei ein geeigneter Formspalt dazwischen verbleibt. Die untere Formhälfte ist gegenüber der oberen Formhälfte bewegbar. Namentlich ist eine der Formen gegenüber der anderen bewegbar oder es sind beide Formen jeweils gegenüber der anderen bewegbar.

Die untere Formhälfte weist Verteilungskanäle für das Druckmedium und Bohrungen für das Druckmedium auf, die über eine Luftleitung mit einer Druckmittelquelle wie Druckluft mit einem Druck im Bereich von 1 bis 30 bar verbunden sind. Luftlöcher sind in allen Flächen der unteren Formfläche vorgesehen, um eine gleichförmige Verteilung des Druckmediums zu gewährleisten, wobei wenigstens ein Luftkanal die Luftleitung mit den Luftlöchern verbindet.

Ein elastisch gelagerter, umlaufender Dichtungsrahmen bildet eine Abdichtung zwischen der oberen Formhälfte und der unteren Formhälfte längs der Peripherie. Der mit der zweiten Formhälfte verbundene Dichtungsrahmen erstreckt sich geschlossen längs des Randes der zweiten Formhälfte, so dass eine luftdichte Abdichtung zwischen der ersten, oberen Formhälfte und der zweiten, unteren Formhälfte gebildet wird, wenn die Formhälften ihre Schließstellung einnehmen. Der Dichtungsrahmen ist vorzugsweise an der unteren Formhälfte über eine nachgiebige Verbindung wie eine federbelastete Gleitanordnung montiert: Der Dichtungsrahmen kann auch als mechanischer Anschlag wirken, der die Schließbewegung der Formen begrenzt, um zuverlässig einen gewünschten Spalt dazwischen zu erhalten.

Entweder die obere Formhälfte oder die untere Formhälfte können als matrizenartige Form ausgebildet sein, während die entsprechende Gegenform als angepasste patrizenartige Form ausgebildet ist. In ähnlicher Weise kann entweder die obere Formhälfte oder die untere Formhälfte als Negativform oder die Positivform angesehen werden, und jede dieser Formen kann die Oberform oder die Unterform sein. Vorzugsweise ist die obere Formhälfte die Oberform, während die untere Formhälfte die Unterform ist. Dieser Formanordnung entspricht, dass die Deckschicht mit dem Träger an der Unterseite orientiert ist, die an ihrer Oberseite das geschmolzene Hautmaterial trägt. Dieses ist insbesondere für größere Formteile erforderlich, weil eine Umkehrung dieser Anordnung "Oberseite nach unten" dem geschmolzenen Hautmaterial die Möglichkeit geben würde, von der als Träger wirkenden Schaumpolsterung herab zu strömen oder zu tropfen. Jedoch kann die Anordnung "Oberseite nach unten" mit Erfolg für kleinere zu formende Teile vorgesehen werden.

Die erfindungsgemäße Vorrichtung umfasst bevorzugt eine Heizeinrichtung. Diese Heizeinrichtung besitzt unterschiedliche Heizelemente, vorzugsweise einerseits Heizstrahler, z.B. Infrarot-Strahler, an der Oberseite zum Erhitzen des oberen Hautmaterials (beispielsweise auf etwa 200° C) und andererseits eine flüssigkeitsgekühlte Temperierplatte aus Metall an der Unterseite, um das Trägermaterial zu unterstützen und auf einer niedrigeren Temperatur (beispielsweise etwa 100°-140° C) zu halten. Die Angabe "etwa" unter Bezugnahme auf Temperaturen bedeutet hier +/- 5° C., soweit sich keine anderweitig Aufgabe findet.

Die Deckschicht wird von einem Spannrahmen, einem Klemmrahmen, einem Tuchrahmen oder dergleichen getragen. Dieser Rahmen kann die Deckschicht beziehungsweise ihre Lagen in die Heizeinrichtung und dann von dort in die Vorrichtung zum Herstellen der Formteile tragen. Grundsätzlich kann aber auch eine andere Trageeinrichtung die Lagen in die Heizeinrichtung transportieren.

Zum deutlicheren Verständnis der Erfindung wird diese nachfolgend im Zusammenhang mit Ausführungsbeispielen unter Bezugnahme auf die beigefügten Zeichnungen beschrieben. Es zeigen:
- Fig. 1:: schematisch einen Schnitt durch eine Vorrichtung mit Heizeinrichtung zum Herstellen der Formteile;
- Fig. 2:: schematisch einen Schnitt durch die Vorrichtung gemäß Fig. 1 nach dem Schließen der Formhälften, wenn Druckluft durch die eine Formhälfte und Vakuum durch die andere Formhälfte auf die Deckschicht aufgebracht werden, wobei die Deckschicht zwischen den beiden Formhälften geformt wird;
- Fig. 3:: schematisch einen Schnitt durch die Vorrichtung entsprechend Fig. 2 während eines weiteren Verfahrensschrittes, bei dem ein Substrat geformt und auf die Rückseite der geformten Deckschicht laminiert wird;
- Fig. 4:: schematisch sowie im größerem Maßstab einen Schnitt durch die zwischen den beiden Formhälften befindliche Deckschicht;
- Fig. 5:: schematisch einen Schnitt ähnlich dem gemäß Fig. 4 durch die umgeformte Deckschicht gemäß einem weiteren Verfahrensschritt, in dem ein Substrat auf die Rückseite der Deckschicht laminiert wird;
- Fig. 6:: schematisch sowie zum Teil im Schnitt eine Ansicht einer abgewandelten Heizeinrichtung vor Beginn des Heizvorganges;
- Fig. 7:: einen Schnitt wie in Fig. 6 während des Aufheizens der Deckschicht und
- Fig. 8:: eine Prinzipskizze von wesentlichen Merkmalen der Heizeinrichtung in Draufsicht.

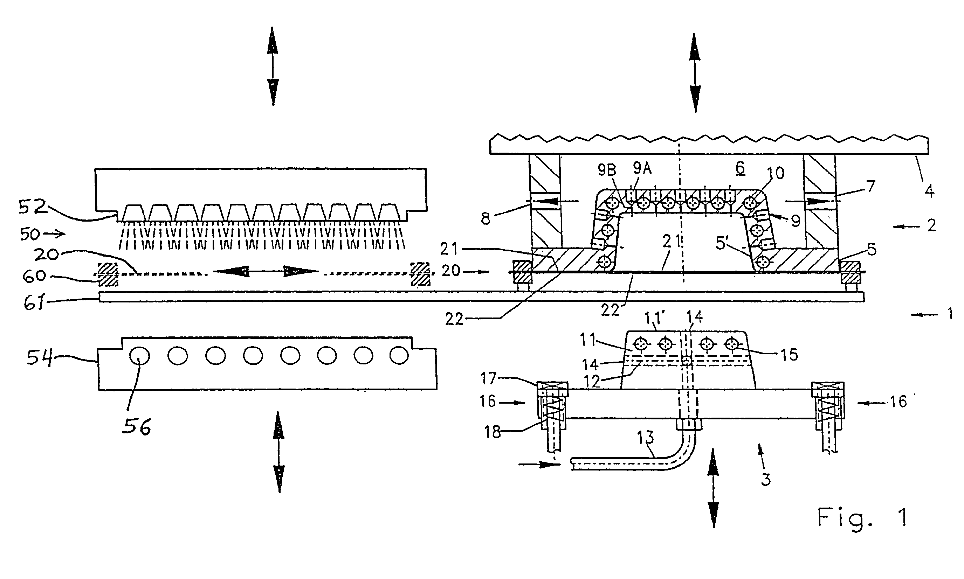

Die erfindungsgemäße Vorrichtung gemäß Fig. 1 umfasst eine Formvorrichtung 1 zum Herstellen von Formteilen mit einer Heizeinrichtung 50 sowie einem Transferwagen für eine Deckschicht. Der Transferwagen besteht in erster Linie aus einem Spannrahmen 60, der die aus zwei bereits miteinander verbundenen Lagen oder aus zwei zunächst nur aufeinanderliegenden Lagen bestehende Deckschicht 20 hält und trägt. Die Deckschicht 20 umfasst eine Haut 21 auf einem als Träger 22 dienenden Schaumstoff. Der Spannrahmen 60 bewegt sich längs Schienen 61 bis in die Heizeinrichtung 50. Er hält die Deckschicht 20 während sie in der Heizeinrichtung 50 erhitzt wird und auf der Temperierplatte 54 liegt. Dann bewegt sich der Spannrahmen längs der Schienen 61, um die erhitzte Deckschicht 20 in die Formvorrichtung 1 zu transportieren.

Die Heizeinrichtung 50 umfasst Heizstrahler beziehungsweise eine Infrarotstrahleranordnung 52, die oberhalb der Ebene des Spannrahmens 60 angeordnet ist. Sie umfasst ferner eine Temperierplatte 54, die während des Heizvorganges in der Ebene des Spannrahmens 60 angeordnet ist. Die Temperierplatte 54 ist beispielsweise eine Metallplatte, die mittels Flüssigkeit in Kanälen 56 derart temperiert wird, dass der Träger 22 die erwünschte Temperatur erreicht. Die Infrarotstrahleranordnung 52 und/oder die Temperierplatte 54 sind jeweils in vertikaler Richtung zu der Ebene des Spannrahmens 60 hin und von diesem weg bewegbar, wie es durch Doppelpfeile angedeutet ist. Hierzu dienen grundsätzlich bekannte, in Fig. 1 nicht dargestellte Einrichtungen wie hydraulische oder pneumatische Zylinder.

Die Haut 21 der Deckschicht 20 wird in der Heizeinrichtung 50 derart stark erwärmt, dass sie teigig beziehungsweise zähflüssig oder sogar schmelzflüssig wird. Der Grad der Viskosität wird in Abhängigkeit von dem Werkstoff derart gewählt, dass eine Oberflächenstruktur 21' in einem nachfolgenden Arbeitsschritt ein gepresst beziehungsweise eingeprägt und dann durch Abkühlung fixiert werden kann. Während des Erhitzens liegt die Haut 21 entweder auf der als Träger 22 dienenden Schaumstoffschicht oder eine Schaumstoffmatte bildet die Unterseite der Haut 21. Als Werkstoff für den Schaumstoff dient zum Beispiel ein chemisch vernetztes Polyurethan. Durch die chemische Vernetzung besitzt dieser Werkstoff nahezu duroplastische Eigenschaften und ist in der Lage, hohen Temperaturen stand zu halten, so dass er sogar noch deutlich über 200° C beständig ist.

Auf der Schaumstoffmatte liegend beziehungsweise zusammen mit der Schaumstoffmatte wird dann die zum Beispiel aus Polyethylen bestehende Haut 21 in eine geöffnete, aus Oberform und Unterform bestehende Formvorrichtung 1 zum Verformen transportiert.

Die Formvorrichtung 1 umfasst ein Formwerkzeug 2 zur Bildung einer Vorderseite und ein Formwerkzeug 3 zur Bildung einer Rückseite eines Produktes und insbesondere der Deckschicht 20 beziehungsweise eines Formteiles 40. Bei dem dargestellten Ausführungsbeispiel ist das Formwerkzeug 2 eine matrizenförmige Oberform, die von einer Kopfplatte oder einem Träger 4 getragen wird, während das Formwerkzeug 3 eine patrizenartige Unterform ist. Entweder eines von beiden oder beide Formwerkzeuge 2 und 3 ist/sind in vertikaler Richtung relativ zueinander bewegbar, wie es schematisch durch Doppelpfeile angedeutet ist.

Die Relativbewegung zwischen den Formen kann mit irgendeinem bekannten Mechanismus erreicht werden, wozu hydraulische Zylinder, pneumatische Zylinder, mechanische Antriebe wie Spindelantriebe und dergleichen zählen.

Alternativ kann entweder das Formwerkzeug 2 oder das Formwerkzeug 3 die Oberform oder die Unterform sowie die patrizenartige Form oder die matrizenartige Form sein, Generell ist jedoch vorzugsweise das Formwerkzeug 2 die Oberform.

Das Formwerkzeug 2 umfasst eine obere Formhälfte 5 mit einer Oberfläche 5', die bearbeitet, poliert und mit einer Oberflächenstruktur durch Eingravieren, Ätzen oder dergleichen versehen wird, wie es zuvor beschrieben wurde. Diese Oberflächenstruktur ist an einem oder mehreren ausgewählten Flächenbereichen oder an der Gesamtheit der Oberfläche 5' vorgesehen.

Die Formhälfte 5 ist vorzugsweise eine massive Stahlform, die sich einfach herstellen, bearbeiten, polieren und gravieren oder ätzen lässt, und zwar mittels bekannter Formgebungs- und Metallbearbeitungstechniken. Eine solche Stahlform bietet eine hohe Eigenfestigkeit, eine lange nutzbare Lebensdauer und erlaubt das Vorsehen eines großen Bereichs von unterschiedlichen Oberflächenstrukturen in ihrer Oberfläche 5'. Alternativ kann die obere Formhälfte 5 eine galvanisch hergestellte Zinkformfläche sein, die sich schneller und billiger herstellen lässt (beispielsweise für Formungsserien mit einer kleineren Anzahl von zu formenden Teilen), aber eine kürzere nutzbare Lebensdauer hat. Solch eine galvanisch produzierte Zinkform kann mittels chemischer Ätzung oder einem Bearbeitungsverfahren perforiert oder porös gemacht werden, um ein durchgehendes Saugvakuum aufzubringen.

Das Formwerkzeug 2 schließt einen Vakuumraum oder eine Vakuumkammer 6 mit wenigstens einem Vakuumkanal 7 ein, der mit einer geeigneten Vakuumquelle (nicht dargestellt) verbunden ist, die dafür ausgelegt ist, ein leichtes Vakuum zu erzeugen, wesentlich weniger als 1 bar unterhalb des Atmosphärendrucks und insbesondere weniger als 0,5 bar unter Atmosphärendruck oder sogar weniger als 0,3 bar (beispielsweise 0,05 bis 0,3 bar) unter Atmosphärendruck, und im besonderen etwa 0,1 bar unter Atmosphärendruck. Der Vakuumkanal 7 kann auch als passiver Lüftungskanal dienen oder aber es kann das Formwerkzeug 2 gegebenenfalls zusätzlich einen Entlüftungskanal 8 aufweisen.

Eine Mehrzahl von Öffnungen zum Erzeugen eines Unterdruckes umfasst Vakuumbohrungen 9, die sich durch die obere Formhälfte 5 erstrecken. Sie stehen mit der Vakuumkammer 6 in Verbindung und erstrecken sich durch die Oberfläche 5'. Jede dieser Vakuumbohrungen 9 in der massiven Formhälfte 5 aus Stahl besteht aus einem mechanisch gebohrten Bohrungsabschnitt 9A und einem lasergebohrten Bohrungsabschnitt 9B.

Der mechanisch gebohrte Bohrungsabschnitt 9A kann irgendeinen geeigneten Durchmesser, beispielsweise 3 bis 5 mm, aufweisen, während der lasergebohrte Bohrungsabschnitt 95 einen sehr feinen Durchmesser, beispielsweise weniger als 0,5 mm, oder speziell weniger als 0,3 mm, und im Einzelfall etwa 0,2 mm aufweist.

Es sei bemerkt, dass die Abmessungen der Vakuumbohrungen 9 in den schematischen Figuren zwecks deutlicherer Darstellung signifikant übertrieben dargestellt sind.

Eine solche kombinierte Struktur der Vakuumbohrungen 9 kombiniert in effizienter Weise die Vorteile eines schnellen und ökonomischen mechanischen Bohrens mit den Vorteilen einer durch Laserbohren hergestellten Bohrung von kleinem Durchmesser.

Der Durchmesser des lasergebohrten Bohrungsabschnitts 9B ist so ausgewählt, dass das geschmolzene Hautmaterial gehindert ist, in diese Vakuumbohrungen 9 einzuströmen oder eingesaugt zu werden, um die Bildung von unerwünschten Knötchen und Punkten oder sonstigen Fehlstellen auf der fertiggestellten Oberfläche des Formteils zu vermeiden. Alternativ können bei einer galvanisch hergestellten oberen Formhälfte 5 aus Zink die Vakuumbohrungen 9 auf chemischem Wege mit dem erforderlichen kleinen Durchmesser durch die Form hindurch ausgebildet oder geätzt werden. Die zahlreichen Vakuumbohrungen 9 sind verteilt und in einem Muster angeordnet, beispielsweise in Abständen von 30 bis 40 mm voneinander quer über die gesamte relevante Oberfläche 5`, auf die ein Vakuum aufgebracht wird, um eine gleichmäßige Aufbringung des Vakuums und die Entlüftung und Entfernung irgendwelcher eingeschlossener Abluft zu gewährleisten.

Die Formhälfte 5 enthält ferner Kühlkanäle 10, durch die eine Temperierflüssigkeit wie Wasser oder Öl strömen kann, um die Formhälfte 5 auf eine konstante und gleichmäßige Temperatur zu temperieren, die geeignet ist, das geformte Teil mit geeigneter Geschwindigkeit zu kühlen und zu verfestigen, beispielsweise eine Formtemperatur im Bereich von 45 bis 60° C und speziell etwa 50 °C.

Das Formwerkzeug 3 umfasst eine zweite Formhälfte 11 mit einer zweiten Oberfläche 11', die allgemein so konfiguriert ist, dass sie zur oberen Formhälfte 5 passt, wobei ein geeigneter Spalt (beispielsweise etwa 4 mm) dazwischen verbleibt, wie es nachfolgend beschrieben wird. Das Formwerkzeug 3 ist mit einem Luftraum oder einem Luftkanal 12 versehen, der mit einer Luftleitung 13 verbunden ist und mit Luftlöchern 14 in verschiedenen Ebenen oder Abschnitten seiner Oberfläche 11' mündet.

Die Leitung 13 kann mit einer Druckluftquelle für zum Beispiel zunächst 100° C heiße Luft oder mit einem anderen Druckmedium wie Dampf, einem anderen Gas oder einer Flüssigkeit bei einem Druck von 1 bis 30 bar, im einzelnen von 6 bis 30 bar und speziell von 5 bis 20 bar, verbunden werden. Die Luftlöcher 14 können von mechanisch gebohrten Löchern geeigneten Durchmessers gebildet sein und sind über die Oberfläche 11' der Unterform beziehungsweise der unteren Formhälfte 11 verteilt, um eine gleichförmige Verteilung der Druckluft oder des anderen Druckmediums im Formverfahren zu gewährleisten.

Alternativ können die Luftlöcher 14 mechanisch gebohrte Abschnitte und lasergebohrte Abschnitte aufweisen, wie es bei den Vakuumbohrungen 9 in der oberen Formhälfte 5 beziehungsweise Oberform 5 der Fall ist.

Eine solche Ausgestaltung erlaubt das Aufbringen entweder eines Druckmediums oder eines Vakuums über die Luftleitung 13 und dann durch die Luftlöcher 14. Die Vorrichtung kann in einer ersten Formstufe mit Vakuum betrieben werden, das durch die obere Formhälfte 5 aufgebracht wird, und mit Druck, der durch die untere Formhälfte 11 aufgebracht wird, um zwei sich auf entgegengesetzten Seiten eines Substrats befindliche Deckschichten zu formen und zusammen zu laminieren, wobei die Haut der Deckschichten auf beiden gegenüberliegenden Seiten des Formteiles entsprechend der Erfindung mit einer Oberflächenstruktur versehen werden. In einem solchen Fall ist auch die Oberfläche 11 ähnlich wie die Oberfläche 5' mit einer Oberflächenstruktur versehen.

Ebenso wie die Formhälfte 5 ist auch die Formhälfte 11 mit Kühlkanälen 15 versehen, durch die eine Temperierflüssigkeit umgewälzt werden kann, um die Formhälfte 11 auf einer gleichmäf3igei und konstanten Temperatur zu halten, die beispielsweise im Bereich von 45° bis 60° C liegt.

Die Vorrichtung 1 weist ferner einen längs der Peripherie umlaufenden Dichtungsrahmen 16 auf, der zur Erzielung einer luftdichten Hochdruckabdichtung zwischen der unteren Formhälfte 11 und der oberen Formhälfte 5 längs ihres Umfangs dient, um ein unter Druck stehendes Druckmedium im Formenspalt zu halten, wie es nachfolgend beschrieben wird.

Diese Dichtung wird während des Formens der Deckschicht 20 und auch in einem späteren Schritt des zweiten Formens und Laminierens eines Substratmaterials 30 auf die Deckschicht 20 wie nachfolgend beschrieben errichtet und aufrecht erhalten. Insbesondere ist der Dichtungsrahmen 16 vorzugsweise elastisch nachgiebig an dem Formwerkzeug 3 beziehungsweise an der Unterform 3 montiert, so dass er sich mit diesem in Richtung auf das Formwerkzeug 2 bewegt, bis ein Dichtglied 17 gegen die Deckschicht drückt und abdichtet (wie es nachfolgend beschrieben wird).

Dann liefert eine elastische Federungseinrichtung 18 wie eine Feder, ein pneumatischer Zylinder oder dergleichen eine Sollkraft, um das Dichtglied 17 fest gegen die obere Formhälfte 5 zu halten, wobei die Deckschicht 20 dazwischen eingeschlossen ist. Der Dichtungsrahmen 16 kann so ausgebildet sein, dass der den Spannrahmen 60 aufnimmt oder mit diesem zusammenarbeitet, um die erforderliche luftdichte Abdichtung zu erreichen.

Ein Beispiel für das Formverfahren in der erfindungsgemäßen Vorrichtung wird nun unter Bezugnahme auf die Figuren beschrieben. Fig. 1 zeigt eine Anfangsstufe beim Betreiben der erfindungsgemäßen Vorrichtung.

Eine Deckschicht 20 mit einer Haut 21 und einem Träger 22 wurde in der Heizeinrichtung 50 erhitzt (wie es durch gestrichelte Linien angedeutet ist) und dann mit mittels des Spannrahmens 60 längs einer flachen horizontalen Ebene transportiert, nämlich längs der Schienen 61, um zwischen der Formhälfte 5 und der Formhälfte 11 positioniert zu werden.

Wie Fig. 1 im einzelnen zeigt, wird die Deckschicht 20 an ihren Umfangskanten durch den Spannrahmen 60 oder alternativ irgendein anderes bekanntes Mittel getragen und gehalten. Die erhitzte Deckschicht 20 kann auch bei kleineren Formaten einfach auf die zweite Formhälfte 11 gelegt werden. Die Haut 21 ist ein thermoplastischer Film, und der Träger 22 ist ein geschlossenzelliger oder im wesentlichen geschlossenzelliger Polymerschaum, der vorzugsweise über seine Dicke luftundurchlässig ist.

Bevorzugt ist die Deckschicht 20 eine übliche bekannte rückseitig beschäumte Folie aus thermoplastischem Polyolefin (TPO). Im besonderen ist der Haut 21 vorzugsweise ein Polypropylenfilm oder ein Polyethylenfilm, jedoch kann es sich alternativ auch um einen Film aus Polyvinylchlorid handeln. Der Träger 22 kann aus dem gleichen Polymermaterial wie der Haut 21 (beispielsweise Polypropylen) jedoch in geschäumten Zustand bestehen, oder es kann ein unterschiedliches Polymermaterial (beispielsweise Polyurethan) sein, das vorzugsweise einen höheren Schmelzpunkt als denjenigen der Haut 21 hat (oder keine aktuelle Schmelztemperatur infolge der Querverbindung).

Eine bevorzugte generelle Kombination ist eine schmelzbare thermoplastische Haut 21 auf einem nicht schmelzenden, wärmegehärteten oder bei höherer Temperatur schmelzenden thermoplastischen Träger 22.

Bei der in Fig. 1 gezeigten Stufe wurde die Deckschicht 20 mittels einer Heizeinrichtung vorerhitzt, beispielsweise mittels der dargestellten Infrarotstrahleranordnung 52, um die Haut 21 zu erwärmen (beispielsweise auf etwa 200° C), während der Träger 22 auf der Temperierplatte 54 aufliegt, so dass der Träger relativ kalt gehalten wird (beispielsweise unter etwa 160°C oder speziell auf etwa 140°C oder weniger), so dass er nicht schmilzt. Jedenfalls wurde die Deckschicht 20 so erhitzt, dass die Haut 21 wenigstens ihre Schmelztemperatur erreicht (und mit genügend Restwärme, so dass sie geschmolzen bleibt, bis sie im nachfolgenden Schritt geformt wird), während der Träger 22 eine Temperatur erreicht, bei der er formbar ist, wobei aber die Temperatur unter der Schmelztemperatur des Trägers 22 liegt.

Die Haut 21 wurde im wesentlichen oder vollständig in einen zähflüssigen Zustand geschmolzen, so dass sie gleichförmig auf dem Träger 22 haften bleibt und von ihm getragen werden kann, der seinen festen, formbaren Schaumzustand beibehält. Insbesondere ist der Träger 22 nicht in einen Zustand erweicht, in dem er unfähig ist, Spannung und Unterstützung für das geschmolzene Material der Haut 21 zu bieten. Im Hinblick auf den geschmolzenen viskosen flüssigen Zustand der Haut 21 ist die Deckschicht 20 vorzugsweise wie dargestellt orientiert, wobei die Haut 21 an der Oberseite des einen Boden bildenden Trägers 22 angeordnet ist. Die geschmolzene Haut kann daher nicht vom Träger 22 abtropfen oder ablaufen.

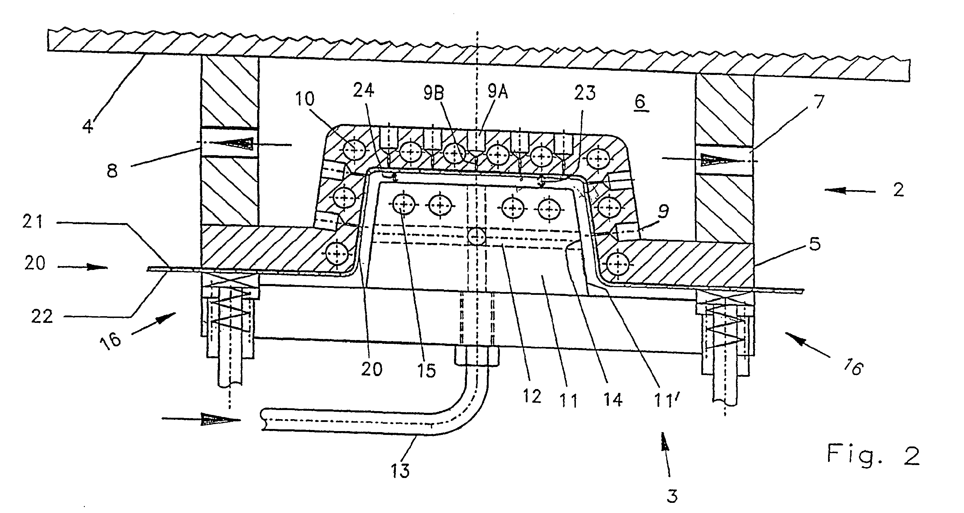

Nachdem die erhitzte Deckschicht 20 wie in Fig. 1 dargestellt zwischen der Formhälfte 5 und der Formhälfte 11 angeordnet wurde, wird die Formhälfte 11 aufwärts bewegt und/oder wird die Formhälfte 5 abwärts bewegt, so dass die Formhälfte 11 beziehungsweise ihre Oberfläche 11' die Deckschicht 20 relativ zur Oberfläche 5' der Formhälfte 5 in eine geformte Kontur verformt, wie es im wesentlichen Fig. 2 zeigt. Die Formhälfte 11 greift an dem etwas kühleren, nicht geschmolzenen Träger 22 an und führt in einem ersten Arbeitsgang einen Tiefziehschritt aus. Dabei wird die geschmolzene Haut 21 gegebenenfalls bereits gegen die strukturierte Oberfläche 5' gedrückt. Ferner wird der Dichtungsrahmen 16 gegen die Formhälfte 5 gedrückt und bildet eine luftdichte Abdichtung längs des Umfanges der Deckschicht 20. Während dieses Tiefziehschrittes kann die Luft passiv aus dem Raum zwischen der Deckschicht 20 und der Oberfläche 5' durch die Vakuumbohrungen 9 und durch den Vakuumkanal 7 oder den Entlüftungskanal 8 entweichen. Es ist nicht notwendig, aber wahlweise möglich, in dieser Stufe ein Vakuum durch den Vakuumkanal 7 aufzubringen. Es wird bevorzugt in dieser Stufe noch kein Vakuum erzeugt, um den Energieaufwand im Hinblick auf das ziemlich große Luftvolumen zu reduzieren.

Wie in Fig. 2 dargestellt, hat sich die Formhälfte 11 aufwärts in eine Endstellung gegenüber der Formhälfte 5 bewegt, wobei ein definierter Formspalt 23 zwischen der Oberfläche 5' und der Oberfläche 11' verbleibt. Dieser Formspalt 23 wird durch den umlaufenden Dichtungsrahmen 16 oder ein anderes Element gesichert, das als Anschlag für die Bewegung der Formhälfte 11 gegenüber der Formhälfte 5 wirkt.

Der Formspalt 23 hat eine Doppelfunktion und Abmessungen derart, dass er in der Lage ist, um die Deckschicht 20 aufzunehmen und einen Luftspalt 24 zwischen den beiden Oberflächen 5' und 11' zu bilden.

Der Luftspalt 24 ist vorzugsweise so bemessen (beispielsweise 4 mm), dass er der Stärke des Substrates 30 entspricht, das in einem anderen Schritt angeformt wird, wie dies später beschrieben wird.

Bei dem in Fig. 2 gezeigten Verfahrensschritt hatten sich die Dichtelemente 17 des umlaufenden Dichtungsrahmens 16 an den Rand des Trägers 22 angelegt, um eine wirksame Abdichtung gegen hohen Druck zu bilden, wobei die Dichtelemente die Deckschicht 20 gegen einen Rand der oberen Formhälfte 5 drücken. Die elastisch nachgiebige Federungseinrichtung 18 hält wie eine Feder den vorgegebenen Dichtungsdruck beziehungsweise die Dichtkraft aufrecht. Dann wird ein Druckmedium, vorzugsweise Druckluft, durch die Luftleitung 13, den Luftkanal 12 und die Luftlöcher 14 in den Luftspalt 24 mit einem signifikanten Druck (beispielsweise 6 bis 30 bar) eingeleitet.

Zwischenzeitlich entweicht jegliche verbliebene Luft, die zwischen der Haut 21 und der Oberfläche 5' der oberen Formhälfte 5 eingeschlossen war, passiv durch die Vakuumbohrungen 9 in die Vakuumkammer 6. Gleichzeitig oder geringfügig später kann ein leichtes Vakuum beziehungsweise ein Unterdruck durch den Vakuumkanal 7 aufgebracht werden, um verbliebene Luftblasen zu entfernen und gleichzeitig einen Unterdruck durch die Vakuumbohrungen 9 auf der Haut 21 aufzubringen.

Dabei drückt das Druckmedium gleichförmig gegen den Träger 22, und es wird die Endformung der Deckschicht 20 gegen die Oberfläche 5' mittels einer rein pneumatischen Blasformung erreicht, vorzugsweise ohne direkten mechanischen Formkontakt zwischen der Oberfläche 11 und der Deckschicht 20 bei diesem Verfahrensschritt. Das Ergebnis ist ein sehr gleichförmiges und konturangepasstes Formen der Deckschicht gegen die Oberfläche 5', was jegliche Toleranzen oder Abweichungen oder dergleichen zwischen den beiden Formen ausgleicht. Da der Träger 22 nicht (oder im Wesentlichen nicht) luftdurchlässig ist, wirkt er als Puffer oder Zwischenschicht und verteilt den Formdruck gleichförmig auf die Haut 21. Dabei wird die geschmolzene Haut gleichmäßig gegen die strukturierte Oberfläche 5' gedrückt und geformt. Gleichzeitig oder kurz danach stellt der Unterdruck, der durch die Vakuumbohrungen 9 aufgebracht werden kann, sicher, dass keine zwischen der Haut 21 und der Oberfläche 5' eingeschlossenen Lufttaschen verbleiben, wobei die Haut 21 fest in einer vorgegebenen, ausgerichteten Stellung gegenüber der Oberfläche 5' gehalten wird.

Dieses gewährleistet, dass sich die Haut 21 nicht gegenüber der Oberfläche 5' verlagert, sobald sie mit ihr in Berührung gekommen ist. Dieses wiederum verhindert die Bildung von Verzerrungen oder "doppelten Abbildungen" der Oberfläche 5' auf der Haut 21.

Wie vorstehend erwähnt wurde die Deckschicht 20 mit der im wesentlichen geschmolzenen Haut 21 in viskos-flüssigem Zustand und bei einer Temperatur oberhalb ihres Schmelzpunktes in der Vorrichtung 1 angeordnet.

Da die Deckschicht 20 gegen die strukturierte Oberfläche 5' durch Druck verformt wird, ergibt sich dementsprechend ein exakt umgekehrtes oder inverses Muster der Struktur in der geschmolzenen Haut 21. Da die geschmolzene Haut 21 in Berührung mit der Formhälfte 5 ist, (die mittels der durch die Kühlkanäle 10 strömenden Kühlflüssigkeit auf eine Temperatur von etwa 50" C temperiert wird), beginnt sich das geschmolzene Material der Haut 21 abzukühlen und dann zu verfestigen, wenn es unter die Schmelztemperatur abgekühlt ist.

Dadurch wird die sich ergebende Kontur und die Oberflächenstruktur der Haut 21 "eingefroren" beziehungsweise fixiert. Gleichzeitig wird der vorerwärmte Träger 22 durch die temperierte Formhälfte 11 abgekühlt, so dass er steifer wird und die geformte Kontur aufrecht erhält.

Daraufhin wird die Zufuhr von Druckmedium durch die Luftleitung 13 unterbrochen, während die Beaufschlagung mit Unterdruck durch den Vakuumkanal 7 und die Vakuumbohrungen 9 vorzugsweise fortgeführt wird, um die geformte Deckschicht 20 in einer festen Stellung in der Formhälfte 5 zu halten. Gleichzeitig setzt sich die Abkühlung und Erstarrung der Deckschicht 20 fort. Dann wird die Vorrichtung 1 geöffnet, wozu die Formhälfte 11 abwärts und/oder die Formhälfte 5 aufwärts bewegt wird. Zu diesem Zeitpunkt kann die fertig gestellte, geformte und strukturierte Deckschicht 20 entnommen und sie kann später in einem separaten Verfahren als Deckhaut auf ein gewünschtes Substrat oder Teil aufgesetzt werden. Alternativ kann in dieser Stufe die Deckschicht 20 auch weiterhin durch Unterdruck an der Formhälfte 5 gehalten werden, und ein Substrat 30 kann direkt auf die Rückseite der vorgeformten Deckschicht 20 in derselben Vorrichtung 1 aufgeformt werden.

Zur Durchführung dieses Schrittes wird das Substratmaterial 30 zwischen der Formhälfte 11 und der Formhälfte 5, namentlich zwischen der Formhälfte 11 und den Träger 22 der Deckschicht 20 eingeführt. Dieses Substratmaterial 30 ist vorzugsweise eine vorgewärmte Schicht aus einem Verbundmaterial von Polyolefinfasern, beispielsweise Polypropylenfasern und natürlichen Fasern oder Glasfasern oder Polyesterfasern oder dergleichen, oder es kann ein Polyurethanschaum vorgesehen sein, der mit Hilfe bekannter Mittel vorgewärmt wurde und der mit bekannten Mitteln in die Vorrichtung getragen oder in ihr angeordnet wird.

Wie in Fig, 3 gezeigt, ist die Formvorrichtung 1 geschlossen, wobei das Formwerkzeug 3 für eine Rückseite aufwärts und/oder das Formwerkzeug 2 abwärts bewegt wurde, so dass die Formhälfte 11 das Substrat 30 gegen die Rückseite des Trägers 22 der zuvor geformten Deckschicht 20 drückt und formt.

In dieser Stufe kann das Formen vollständig mechanisch durchgeführt werden, also ohne dass ein durch die Luftleitung 13 zugeführtes Druckmedium erforderlich ist, aber alternativ ist es von Vorteil, wiederum ein Druckmedium durch die Luftleitung 13 einzuführen, um einen gleichförmigen Formdruck auf das Substrat 30 aufzubringen, was eine Anpassung oder einen Ausgleich für irgendwelche Abweichungen oder Toleranzen bei den Formkonturen führt. Der Dichtungsrahmen 16 hält die luftdichte Abdichtung ringsum am Umfang der geformten Anordnung aufrecht, Die vorgewärmten und wenigstens teilweise geschmolzenen Polyolefinfasern des Substrats 30 erfahren eine Schmelzverklebung mit dem noch warmen oder noch heißen Träger 22 der Deckschicht 20, so dass das Substrat 30 integral mit der Deckschicht 20 verbunden wird, ohne dass irgendein zwischenliegender Klebstoff oder dergleichen erforderlich ist. Ferner wurde das Substrat 30 mechanisch in die erforderliche dreidimensional konturierte Konfiguration geformt und verformt, während das Substratmaterial 30 nun den Teil des Formspalts 23 einnimmt, der zuvor der Luftspalt 24 in der Formgebungsstufe gemäß Fig. 2 war.

Auf diese Weise kann das gesamte Formungsverfahren mit seinen Schrittfolgen zum Formen und Aufbringen einer Oberflächenstruktur auf die Deckschicht 20 und dann das Formen und Laminieren des Substrats 30 auf die Deckschicht 20 mit einem einzigen Satz von Formwerkzeugen in einer einzigen Vorrichtung 1 durchgeführt werden, und zwar in zwei aufeinander folgenden Formungsstufen, ohne dass irgendeine Neuausrichtung oder Umpositionierung der Formen oder sonstiger Ausrüstungsteile erforderlich wird und ohne dass das geformte Teil für irgendeinen erforderlichen Verfahrensschritt zu einer anderen Vorrichtung bewegt werden muss.

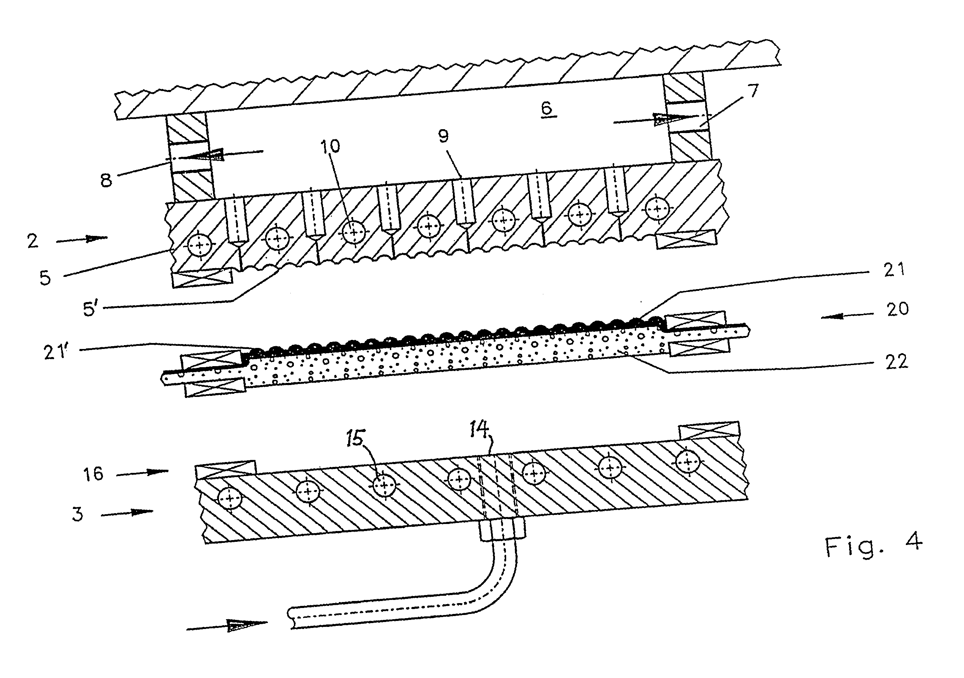

Zur Verdeutlichung zeigt Fig. 4 schematisch das vergrößerte Ergebnis der gemäß Fig. 2 durchgeführten ersten Formstufe. Namentlich sind sowohl die Oberflächenstruktur der Oberfläche 5' als auch die sich ergebende Oberflächenstruktur 21' der Haut 21 der Deckschicht 20 vergrößert dargestellt, um eindeutig zu veranschaulichen, dass die sich ergebende Oberflächenstruktur 21' der Haut 21 das exakte unverzerrte Negativabild oder die Umkehrung der Oberflächenstruktur ist, die in die Oberfläche 5' der Formhälfte 5 eingeprägt beziehungsweise eingedrückt wurde.

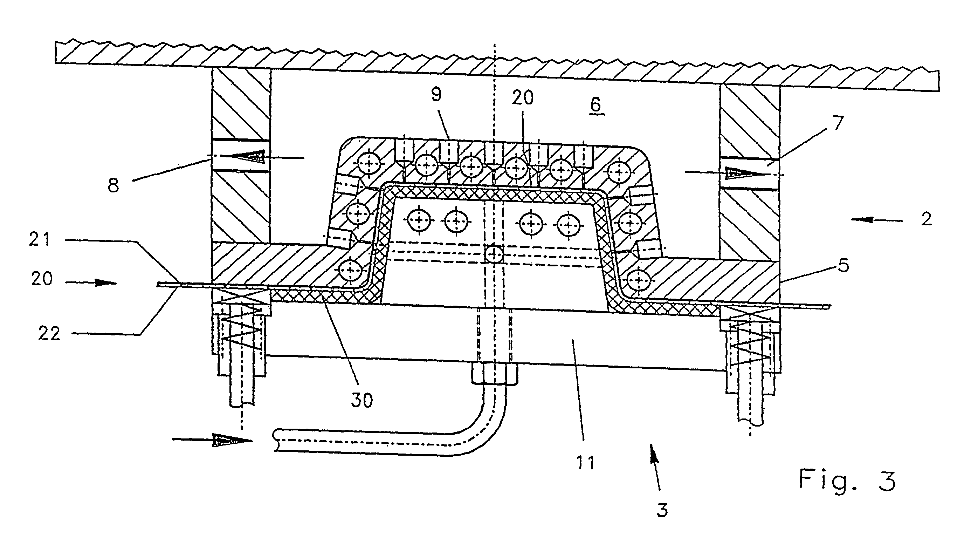

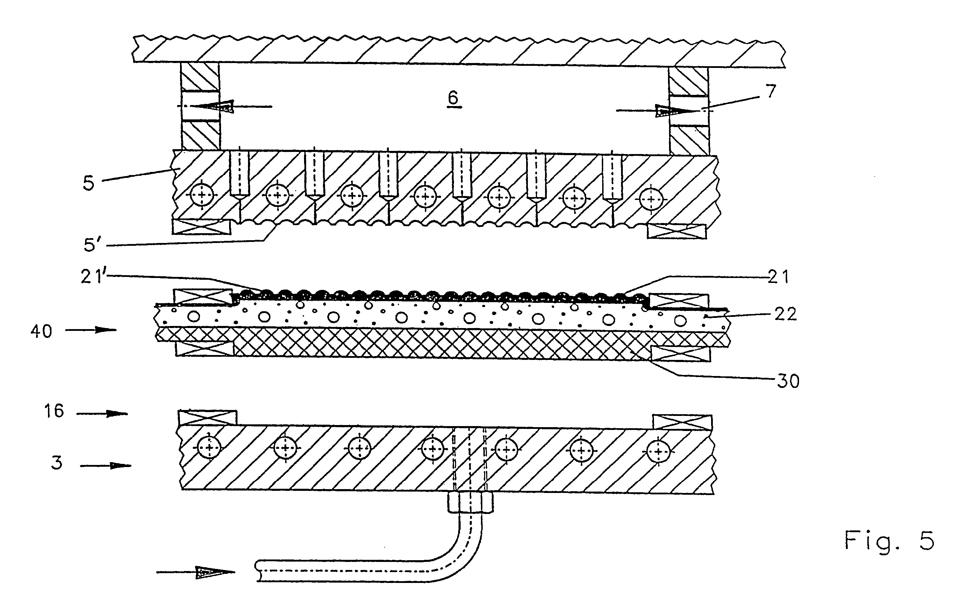

In entsprechender Weise zeigt Fig. 5 eine vergrößerte schematische Einzelheit des Ergebnisses aus der Durchführung der zweiten Formungsstufe gemäß Fig. 3. Die Deckschicht 20 behält ihre Oberflächenstruktur 21' und Kontur, während ein Substratmaterial 30 auf ihre Rückseite geformt und laminiert wurde.

Es sei angemerkt, dass infolge des Formspaltes 23 einschließlich des Luftspaltes 24, der später das Substratmaterial 30 in der Stufe gemäß Fig. 3 aufnimmt, sichergestellt ist, dass der Träger 22 nicht zerquetscht oder verdichtet wird, so dass das fertig gestellte Formteil 40 seine "Weichfühl"-Eigenschaft beibehält, während e zugleich eine genau texturierte und/oder konfigurierte Oberflächenstruktur 21' aufweist.

Als Alternative zum Einführen einer Schicht aus Substratmaterial 30 in der zweiten Formungsstufe gemäß Fig. 3 ist es auch möglich, ein schäumendes Polymermaterial durch Sprühen, Gießen, Schütten oder Einspritzen des Materials in den Luftspalt 24 zwischen die Deckschicht 20 und die Formhälfte 11 einzuführen, um das Substrat 30 zu bilden. In jedem Fall wird das Substratmaterial 30 in die erforderliche dreidimensional konturierte Form gebracht und geformt, während es zugleich laminiert und zum Anhaften auf dem Träger 22 der Deckschicht 20 gebracht wird. Nach einer weiteren Alternative ist das Druckmedium selbst ein schäumendes Polymerharz, das in flüssiger Form in den Formspalt eingebracht wird, beispielsweise durch Injektion durch entsprechende Einspritzkanäle bei der Formstufe gemäß Fig. 2. Dieses kombiniert im Ergebnis die Stufen von Fig. 2 und Fig. 3 zu einer einzelnen Stufe. Da das in den Formspalt bei der Stufe gemäß Fig. 2 eingespritzte, schäumende Polymerharz zu schäumen beginnt und expandiert, erzeugt es einen entsprechenden Druck und dabei wirkt es als Druckmedium, das die Deckschicht 20 gegen die Oberfläche 5' in der Formstufe gemäß Fig. 2 drückt, wie es vorstehend beschrieben wurde. Wenn dann das schäumende Polymerharz abkühlt und erhärtet oder aushärtet, wobei es in Kontakt mit der temperierten Formhälfte 11 steht, bildet es direkt das Substrat 30 wie in Fig, 3 gezeigt. Dementsprechend erlaubt das Hinterschäumen das gesamte Formverfahren mit einem einzigen Öffnungs- und Schießzyklus durchzuführen.

Unabhängig von der besonderen Art der Anbringung und Formung des Substrats 30 werden das Substrat 30 und die Deckschicht 20 weiter abgekühlt und etwas verfestigt in der Stufe gemäß Fig. 3, was eine Folge des Kontaktes mit der Formhälfte 5 und der Formhälfte 11 ist, die mittels Kühlung temperiert werden. Wenn die Form zum Schluss geöffnet wird, wird das fertig gestellte Formteil 40, das schematisch in Fig. 5 dargestellt ist, aus der Form entfernt, nachdem die Vakuumaufbringung durch den Vakuumkanal 7 unterbrochen wurde.

Alternativ könnte auch die geformte Deckschicht 20 selbst ohne die Substratlaminierung gemäß Fig. 3 verwendet werden. Mit anderen Worten könnte das Verfahren nach der Vervollständigung gemäß Fig. 2 als abgeschlossen betrachtet werden.

Dann könnte die geformte und strukturierte Deckschicht mit irgend einem üblichen Substrat in üblicher Weise kombiniert oder in geeigneten Anwendungsfällen "wie sie ist" verwendet werden.

Bei weiteren optionalen Schritten kann nach der Vervollständigung in der zweiten Formstufe gemäß Fig. 3 eine weitere Deckschicht auf die entgegengesetzte Fläche des Substrats 30 geformt werden, wobei diese zusätzliche Deckschicht ebenfalls mit einer Oberflächenstruktur in ihrer Haut versehen werden kann. Dazu würde die Deckschicht in gleicher Weise wie die Deckschicht 20 vorerhitzt, so dass ihre Haut auf eine Temperatur oberhalb der Schmelztemperatur gebracht wird, während ihr Träger eine Temperatur unterhalb des Schmelzpunktes aufweist. Dann wird die vorerhitzte zusätzliche Deckschicht in die offene Form zwischen dem Substrat und der Unterform beziehungsweise der unteren Formhälfte 11 eingeführt, deren Oberfläche 11' ebenfalls mit einer Oberflächenstruktur versehen wurde. Darauf wird die Form mit einer genügend größeren Formspaltöffnung geschlossen, damit der Platz für die zusätzliche Deckschicht vorhanden ist. Druckluft wird den Vakuumbohrungen 9 zugeführt, während ein Vakuum über die Luftlöcher 14 aufgebracht wird, um im Wesentlichen die Anfangsformung und das Verfahren der Oberflächenstrukturierung gemäß Fig. 2 durchzuführen, wobei jedoch die Funktionen der oberen Formhälfte 5 und der anderen Formhälfte 11 miteinander vertauscht sind. In dieser Stufe lässt sich keine Blasformung in dem Umfang wie in der ersten Stufe erreichen, jedoch wird die eingeformte Oberflächenstruktur ausgebildet. Auf diese Weise kann ein fertiges Formteil 40 hergestellt werden, das strukturierte Oberflächen 21' der jeweiligen Haut 21 auf entgegengesetzten Seiten aufweist.

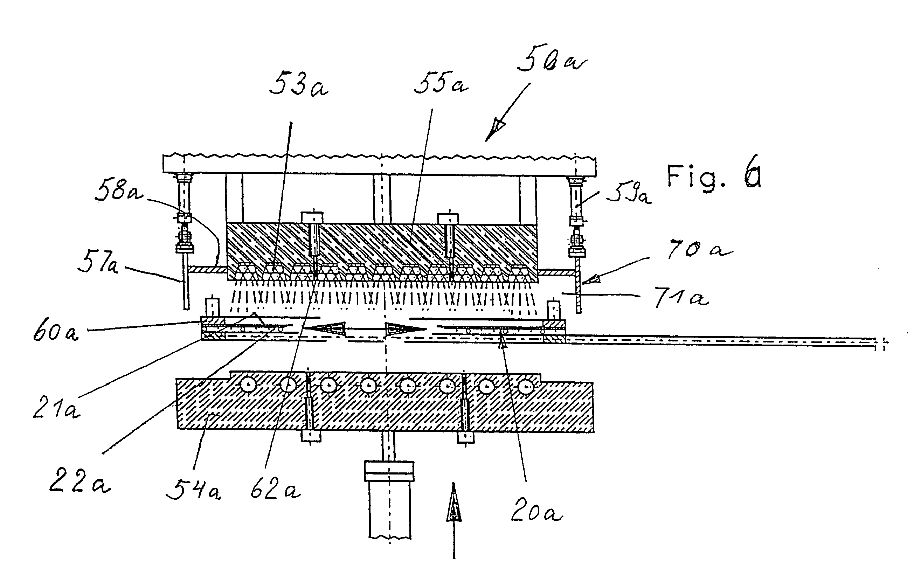

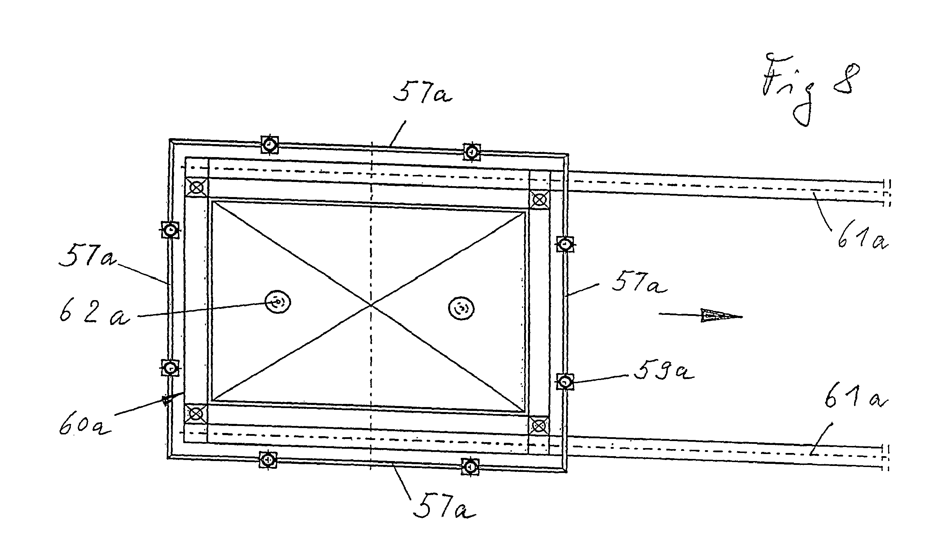

Eine abgewandelte Form der Heizeinrichtung 50 ist in den Fig. 6 - 8 dargestellt. Grundsätzlich gleiche Teile weisen dieselben Bezugszahlen und zusätzlich den Buchstabenindex a wie bei der Heizeinrichtung 50 gemäß Fig. 1 auf.

Auch die Heizeinrichtung 50a dient zum Erhitzen einer Deckschicht 20a, die aus einer nachfolgend als Haut 21 a bezeichneten Dekorschicht und einer zweiten, als Träger für die stark erhitzte Haut 21 a dienenden Trageschicht besteht.

Charakteristisch für die Heizeinrichtung 50a im Vergleich zu der anderen Heizeinrichtung 50 ist eine zusätzlich vorgesehene Schutzhaube 70a, die dafür sorgt, dass sich die aus zwei Lagen bestehende Deckschicht 20a beim Erhitzen in einer geschlossenen Kammer 71a befindet, Die Heizzone ist somit während des Heizvorganges gekapselt.

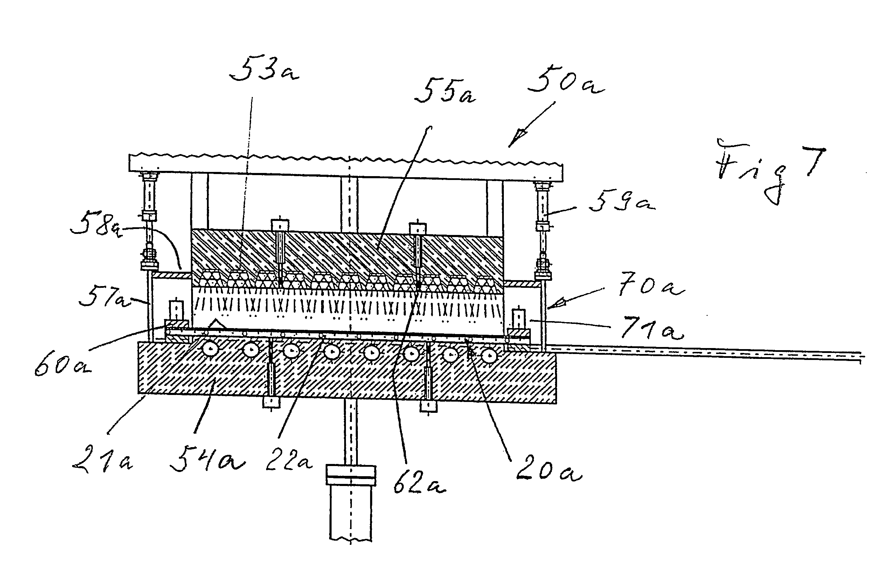

Wie bei dem ersten Ausführungsbeispiel sind unterschiedliche Heizelemente mit unterschiedlicher Zielsetzung vorgesehen. Dies sind gemäß Ausführungsbeispiel Heizstrahler und insbesondere Infrarotstrahler 53a an einem die Kammer 71a noch oben abschließenden Deckenelement 55a einerseits und eine Kontaktheizung mit einer Kontaktfläche in Gestalt einer Temperierplatte 54a andererseits. Während des Heiz- oder Erwärmungsschrittes berührt die Temperierplatte 54a die Deckschicht 20a von unten. Die Schutzhaube 70a umfasst Seitenwände 57a, die allseitig angeordnet sein können. Ferner sind gemäß dem in Fig. 7 dargestellten Ausführungsbeispiel auch noch Zwischenstücke 58a vorgesehen, die den freien Raum zwischen den Seitenwänden 57a und dem Deckenelement 55a überbrücken.

Wie aus einem Vergleich der Fig. 6 und 7 hervorgeht, sind die Zwischenstücke 58a starr mit dem Deckenelement 55a der Heizeinrichtung 50a verbunden. Die Seitenwände 57a sind relativ zu den Zwischenstücken 58a nach oben und unten bewegbar. Dadurch ist es möglich, die Kammer 71 a zu öffnen und zu schließen. Um eine zweilagige oder aus zwei einzelnen Lagen bestehende Deckschicht 20a in der Kammer 71 a anzuordnen, muss sie geöffnet werden. Um die Haut 21 a im erforderlichen Umfang sowie gleichmäßig zu erwärmen beziehungsweise in einen teigig oder fast flüssigen Zustand zu erhitzen, werden die Seitenwände 57a der Schutzhaube 70a abgesenkt, bis die Kammer 71 a geschlossen ist. Zum Entnehmen der Deckschicht 20a mit Hilfe des Spannrahmens 60a wird die Kammer 71 a dann wieder geöffnet, so wie dies in Fig. 6 dargestellt ist.

Zum Heben und Senken der Seitenwände 57a der Schutzhaube 70a sind Antriebsmittel 59a vorgesehen, bei denen es sich um pneumatische oder hydraulische Antriebe handeln kann.

Aber nicht nur die Schutzhaube 70a beziehungsweise die während des Heizvorganges geschlossene Kammer 71 a dienen zur Herstellung einer gleichmäßigen Temperaturverteilung, sondern auch zweckmäßigerweise vorgesehene Temperaturfühler 62a im Inneren der Kammer 71 a. Mindestens zwei Temperaturfühler 62a sind zwischen den Infrarotstrahlern 53a angeordnet und mit Hilfe einer hier nicht näher interessierenden Steuerung in der Lage, gegebenenfalls verschiedene Heizstrahler zu drosseln oder deren Wirkung zu verstärken.

Von grundsätzlicher und allgemeiner Bedeutung ist, dass die Deckschicht 20a aus zwei Lagen 21a und 22a besteht. Die Schmelzpunkte der Werkstoffe dieser beiden Lagen 21 a und 22a sind verschieden. Die eine, als Dekorschicht 21 a dienende Lage weist einen im Vergleich niedrigeren Schmelzpunkt auf als die andere, als Träger 22a dienende Lage.

Ferner ist die Temperierplatte 54a vorgesehen und sorgt dafür, dass die als Träger 22a dienende Lage auf einer ausreichend niedrigen Temperatur während des Heizvorgangs gehalten wird, damit sie eine ausreichende Stabilität und Festigkeit zum Tragen und Transportieren der anderen Lage 21a trotz deren Erwärmung und Erweichung beibehält.

Der Erweichungsgrad der als Haut oder Dekorschicht dienenden Lage 21 a kann entsprechend den Anforderungen unterschiedlich sein. Es muss eine thermoplastische Verbindung mit dem Träger 22a erfolgen und eine Oberflächenstrukturierung oder dergleichen durch einen Druck- und Prägevorgang muss grundsätzlich möglich sein. Sowohl die als Dekorschicht dienende Lage 21 a als auch die als Träger dienende Lage 22a können Kunststofffolien sein.

Als Werkstoff für die Trageschicht 22a dient jedoch insbesondere ein chemisch vernetzter, geschlossenporiger Kunststoffschaum. Entweder ist dessen Erweichungstemperatur wesentlich höher als die der stark erhitzten Dekorschicht 21 a oder die Temperatursteuerung für die Trageschicht 22a in der Heizeinrichtung 50a wird derart gewählt, dass die Trageschicht 22a eine ausreichende Stabilität und Festigkeit behält, um als Träger für die erweichte, teigige, zähflüssige oder schmelzflüssige Haut 21a zu dienen.

Die Temperatursteuerung in der Heizeinrichtung 50, 50a kann daher derart sein, dass die eine Lage 21, 21a auf eine Temperatur von 200° C (etwa 200° C) und die andere Lage 22, 22a auf eine Temperatur von 100° C (etwa 100° C) erwärmt wird. Die Temperierplatte 54, 54a hat dann vorzugsweise eine Temperatur von etwa 80° C bis 90° C.

Zum Verformen in der Vorrichtung 1 werden dann ein Tiefziehschritt und daraufhin nur Druck mit Hilfe eines Strömungsmediums verwendet. Ein Vakuum beziehungsweise Unterdruck wird in der Vorrichtung 1 erst dann angelegt, wenn die Haut 21, 21a ausreichend erhärtet ist, um ein Verrutschen der Haut aus der Kontur zu verhindern, und vorzugsweise erfolgt erst in einem weiteren Schritt das Hinterpressen mit einem Substrat von zum Beispiel 200° C heißem Polypropylen-Naturfaser-Gemisch.

Der Schaumstoff besitzt schließlich nicht nur eine Funktion als Trägerwerkstoff, sondern auch als Brücke bei dem Unterdruck in der Vorrichtung 1. Er trägt dazu bei, dass die Haut nicht in die lasergebohrten Bohrungsabschnitte 98 gesaugt wird.

Sehr wesentlich ist schließlich, dass mehrlagige Formteile 40 und insbesondere Innenverkleidungsteile für Kraftfahrzeuge hergestellt werden können, wobei zunächst ein Halbfabrikat/Vorprodukt durch Tiefziehen und Hinterpressen mit einem Strömungsmedium, d. h. insbesondere mit Druckluft in einem Formspalt 23 zwischen zwei Formhälften 5, 11 hergestellt werden kann und dass so dann auf das Halbfabrikat ein Substrat 30 dadurch aufgebracht wird, dass der Formspalt 23 mit dem Substratwerkstoff gefüllt wird, so dass das Halbfabrikat zur Herstellung des Endproduktes den Formhälften 5, 11 nicht entnommen werden muss.

## Patentansprüche

1. Vorrichtung zum Herstellen eines Formteiles (40) mit einer eingeformten Oberflächenstruktur (21'), bestehend aus einem Formwerkzeug (2) für die Vorderseite und einem Formwerkzeug (3) für die Rückseite, wobei es sich bei dem Formwerkzeug (2) um eine Oberform beziehungsweise eine obere Formhälfte (5) mit einer Oberfläche (5') und einer Oberflächenstruktur handelt, die in die Oberfläche (5') eingraviert, eingefräst, eingedrückt, eingeprägt oder geätzt wurde;
wobei das Formwerkzeug (2) ferner eine Vakuumkammer (6) und einen Vakuumkanal (7) aufweist, der an die Vakuumkammer (6) anschließt und einer Unterdruckquelle verbindbar ist;
wobei das Formwerkzeug (2) eine Vielzahl von Vakuumbohrungen (9) aufweist, die in der Oberfläche (5') münden und mit der Vakuumkammer (6) in Verbindung stehen;
wobei das Formwerkzeug (3) für die eine Rückseite eine Formhälfte (11) mit einer der Oberfläche (5') gegenüberliegenden Oberfläche (11') und eine mit einer Druckluftquelle verbindbare Luftleitung (13) und mehrere Luftlöcher (14) in der Oberfläche (11) aufweist; wobei wenigstens ein Luftkanal (12) die Luftleitung (13) mit den Luftlöchern (14) verbindet;
und wobei das Formwerkzeug (3) wenigstens einen umlaufenden Dichtungsrahmen (16) aufweist, der mit der zweiten Formhälfte (11) verbunden ist und sich geschlossen längs des Randes der Formhälfte (11) erstreckt, so dass eine luftdichte Abdichtung zwischen der Formhälfte (5) und der Formhälfte (11) gebildet wird, wenn die Formhälften (5, 11) ihre Schließstellung einnehmen.

2. Vorrichtung umfassend eine Formvorrichtung(1) zum Herstellen eines Formteiles (40) mit einer' eingeformten Oberflächenstruktur (21'), bestehend aus einem Formwerkzeug für die Vorderseite und einem Formwerkzeug für die Rückseite, wobei es sich bei dem Formwerkzeug für die Vorderseite um eine Unterform beziehungsweise eine untere Formhälfte mit einer Oberfläche (5') und einer Oberflächenstruktur handelt, die in die Oberfläche (5') eingraviert, eingefräst, eingedrückt, eingeprägt oder geätzt wurde;
wobei das untere Formwerkzeug für die Vorderseite ferner eine Vakuumkammer (6) und einen Vakuumkanal (7) aufweist, der an die Vakuumkammer (6) anschließt und einer Unterdruckquelle verbindbar ist;
wobei das untere Formwerkzeug für die Vorderseite eine Vielzahl von Vakuumbohrungen (9) aufweist, die in der Oberfläche (5') münden und mit der Vakuumkammer (6) in Verbindung stehen;
wobei das obere Formwerkzeug für die Rückseite eine Formhälfte (11) mit einer der Oberfläche (5') gegenüberliegenden Oberfläche (11') und eine mit einer Druckluftquelle verbindbare Luftleitung (13) und mehrere Luftlöcher (14) in der Oberfläche (11) aufweist; wobei wenigstens ein Luftkanal (12) die Luftleitung (13) mit den Luftlöchern (14) verbindet;
und wobei das obere Formwerkzeug für die Rückseite wenigstens einen umlaufenden Dichtungsrahmen (16) aufweist, der mit der zweiten Formhälfte (11) verbunden ist und sich geschlossen längs des Randes der Formhälfte (11) erstreckt, so dass eine luftdichte Abdichtung zwischen der Formhälfte (5) und der Formhälfte (11) gebildet wird, wenn die Formhälften (5, 11) ihre Schließstellung einnehmen.

3. Vorrichtung nach Anspruch 1, **dadurch gekennzeichnet, dass** die obere Formhälfte (5) eine massive Stahlform ist und dass jede der Vakuumbohrungen (9) mindestens einen lasergebohrten Bohrungsabschnitt (9B) umfasst, der in der Oberfläche (5') mündet.

4. Vorrichtung nach Anspruch 3, **dadurch gekennzeichnet, dass** die lasergebohrten Bohrungsabschnitte (98) einen Durchmesser nicht größer als 0,5 mm aufweisen.

5. Vorrichtung nach Anspruch 4, **dadurch gekennzeichnet, dass** jede der Vakuumbohrungen (9) einen mechanisch gebohrten Bohrungsabschnitt (9A) von größerem Durchmesser als die lasergebohrten Bohrungsabschnitte (9B) aufweist, und dass die mechanisch gebohrten Bohrungen (9A) mit den lasergebohrten Bohrungen (9B) in Verbindung stehen und sich zur Vakuumkammer (6) erstrecken.

6. Vorrichtung nach Anspruch 1 oder 2, **dadurch gekennzeichnet, dass** die Formhälfte (5) eine galvanisch geformte Zinkform ist und dass jede der Vakuumbohrungen von einer chemisch geätzten oder porenförmigen Öffnung durch die Zinkform gebildet ist.

7. Vorrichtung nach Anspruch 1 oder 2, **dadurch gekennzeichnet, dass** zum Erwärmen und Erhitzen von einer aus mindestens zwei zueinander angeordneten Lagen bestehenden Schicht (20) für das Formteil (40) zusätzlich eine Heizeinrichtung vorgesehen ist, wobei die Heizeinrichtung unterschiedliche Heizelemente (53, 53a) und Heizelemente (54, 54a) besitzt, die auf unterschiedliche Temperaturen einstellbar sind, so dass die Lagen (21, 21a; 22, 22a) der Schicht (20, 20a) unterschiedlich erhitzt werden können.

8. Vorrichtung nach Anspruch 7, **dadurch gekennzeichnet, dass** für die eine Lage (21, 21a) mit Hilfe von Heizstrahlern (53, 53a) eine Erwärmungstemperatur einstellbar ist und für die andere Lage (22, 22a) mit Hilfe einer Kontaktheizung (54, 54a) eine Erwärmungstemperatur einstellbar ist.

9. Vorrichtung nach Anspruch 8, **dadurch gekennzeichnet, dass** die Heizstrahler (53, 53a) für die eine Lage (21, 21a auf eine höhere Temperatur und die Kontaktheizung (54, 54a) für die andere Lage (22, 22a) auf eine niedrigere Temperatur einstellbar sind.

10. Vorrichtung nach Anspruch 7, **dadurch gekennzeichnet, dass** eine Heizzone und eine Kapselung dieser Heizzone während des Erhitzens vorgesehen ist.

11. Vorrichtung nach Anspruch 10, **gekennzeichnet durch** eine Schutzhaube (70a) für die Heizzone.

12. Vorrichtung nach Anspruch 7, **dadurch gekennzeichnet, dass** mindestens zwei Temperaturfühlern (62a) in der Heizzone vorgesehen sind.

13. Vorrichtung nach Anspruch 7, **dadurch gekennzeichnet, dass** ein Spannrahmen (60, 60a) für die mindestens zweilagige Schicht (20, 20a) vorgesehen ist und dieser Spannrahmen (60, 60a) die Kontaktfläche der Kontaktheizung (54, 54a) mindestens teilweise umgreift, so dass die Lage (22, 22a) auf der Kontaktfläche aufliegt.

14. Vorrichtung nach einem der Ansprüche 7 bis 13, **dadurch gekennzeichnet, dass** zur besseren Positionierung des Spannrahmens (60, 60a) zwischen den Formhälften (5, 11) dieser bewegbar zwischen der Heizeinrichtung (50, 50a) und der Formvorrichtung (1) angeordnet ist, vorzugsweise auf Schienen (61).

15. Vorrichtung nach einem der Ansprüche 1 bis 14, **dadurch gekennzeichnet, dass** der Dichtungsrahmen (16) elastisch nachgiebig an dem Formwerkzeug (3) angeordnet ist, nämlich mit dem Formwerkzeug (3) in Richtung auf das Formwerkzeug (2) bewegbar, bis ein Dichtglied 17 gegen die Deckschicht drückt und abdichtet.

16. Vorrichtung nach Anspruch 15, **dadurch gekennzeichnet, dass** der Dichtungsrahmen (16) ein Dichtglied (17) besitzt, welches gegen die umzuformende Deckschicht (20) andrückbar ist, vorzugsweise mittels einer elastischen Federeinrichtung (18).

17. Vorrichtung nach einem der Ansprüche 13 bis 16, **dadurch gekennzeichnet, dass** der Dichtungsrahmen (16) so ausgebildet ist, dass er den Spannrahmen (60, 60a) aufnehmen kann.

18. Vorrichtung nach einem der Ansprüche 1 bis 17, **dadurch gekennzeichnet, dass** in der Formvorrichtung (1) ein definierter Formspalt (23) zwischen der Oberfläche (5)' und der Oberfläche (11') einstellbar ist, wenn die Formhälften (5, 11) ihre Schließstellung einnehmen.

19. Vorrichtung nach Anspruch 15, **dadurch gekennzeichnet, dass** der Dichtungsrahmen (16) als Anschlag für die Formhälften (5, 11) dient und so den Formspalt (23) sichert.

20. Vorrichtung nach Anspruch 18 oder 19, **dadurch gekennzeichnet, dass** der Formspalt (23) so bemessen ist, dass er die Deckschicht(20, 20a) unter Bildung eines Luftspaltes (24) zwischen den Formhälften (5, 11) aufnehmen kann.

21. Vorrichtung nach Anspruch 15, **dadurch gekennzeichnet, dass** der Luftspaltes (24) so bemessen ist, dass er das Substrat (30) aufnehmen kann, welches durch Einführen einer Schicht, durch Einsprühen, Gießen, Schütten oder Einspritzen von Material gebildet werden kann.
